# EUROPEAN PATENT SPECIFICATION

(11) **EP 2 767 522 B1**
(45) Date of publication and mention of the grant of the patent: **25.10.2023**
(21) Application number: 14155290.1
(22) Date of filing: 14.02.2014
(51) Int. Cl.: C04B 28/02, C04B 14/30

(54) **Concrete containing nano sized bohemite crystallites**
Beton enthaltend Nano-Böhmit-Kristallite
Béton contenant des cristallites de boéhmite nanométriques

(30) Priority: 14.02.2013 US 201361764740 P; 30.05.2013 DE 202013102359 U
(43) Date of publication of application: 20.08.2014
(73) Proprietor: Sasol North America Inc., Houston, TX 77079 (US)
(72) Inventor: Glöckler, Reiner, 25693 MIchaellsdonn (DE); Fenton, Jeff, 77450 Katy, Texas (US); Baxter, Steven, 84663 Springville, Utah (US)
(74) Representative: Müller Schupfner & Partner Patent- und Rechtsanwaltspartnerschaft mbB

(56) References cited:
- EP-A1- 1 992 597
- CN-A- 103 553 380
- US-A- 2 915 475
- US-A- 4 356 271

## Description

The present invention relates to concrete comprising aggregate and a cement composition comprising cement, nano-sized crystalline particles of boehmite alumina optionally together with silicon oxide, calcium oxide and/or magnesium oxide. The boehmite alumina preferably has an average crystallite size from about 2 nm to about 80 nm and a content of non-crystalline alumina of less than about 25 mol percent based on the total aluminum. The concrete may be uncured or cured.

### BACKGROUND OF THE INVENTION

Concrete is one of the most widely used materials for construction. It is used in the construction of roads, buildings, and numerous other structures.

In an effort to make stronger concrete there is ongoing research devoted to increasing the mechanical properties of concrete. Cement is the binder that forms together with aggregate concrete. Cement is often used together with additives such composition is called herein cement composition, which again together with aggregate and optionally other components forms concrete. In this regard, it is known that the addition of nano-silica particles to cement, increases density, reduces porosity, improves the bond between the cement matrix and aggregates, all of which result in a concrete that shows higher compressive and flexural strength (see Land, G. & Stephan, D., The Influence of Nano-Silica on the Hydration of Ordinary Portland Cement, J. Mater. Sci. (2012) 47: 1011.

The documents CN 103553380 and US 4356271 disclose cement compositions comprising nano-bohemite.

Early age cracking can be a significant problem in concrete. Volume changes in concrete drive tensile stress development when they are restrained. Accordingly, cracks can develop when the tensile stress exceeds the tensile strength, which is generally only ten percent of the compressive strength. At early stages, the strength is still developing while stresses are generated by volume changes. Controlling the variables that effect volume change can minimize high stresses and cracking.

The volume of concrete begins to change shortly after it is cast. Early volume changes, within twenty-four hours, can influence tensile stress and crack formation in hardened concrete. Chemical shrinkage occurs due to the reduction in absolute volume of solids and liquids in the hydrating paste. Chemical shrinkage continues to occur as long as cement hydrates. After the initial set, the paste resists deformation, causing the formation of voids in the microstructure.

Autogenous shrinkage is the dimensional change of cement paste, mortar, or concrete caused by chemical shrinkage. When internal relative humidity is reduced below a given threshold, self-desiccation of the paste occurs resulting in a uniform reduction of volume.

### SUMMARY OF THE INVENTION

The present invention provides a concrete as set in claim 1.

The features and advantages of the present invention will become apparent from the following detailed description.

### DETAILED DESCRIPTION OF PREFERRED EMBODIMENTS

The nano-alumina used in the cement compositions used in the concrete of the present invention are of the boehmite form (including in one embodiment pseudoboehmite crystal form) and will independent of each other preferably have one or more of the following properties:
- an agglomerated particle size of less than 350 nm as for example from 20 nm to less than 350 nm, a calcined surface area of from 2 m²/g to 300 m²/g, especially from 35 m²/g to about 275 m²/g;
- a purity of greater than about 99% by weight;
- an average crystallite size measured on the [020] plane of from 2 nm to 80 nm, preferably from 3 nm to 60 nm;
- a content of non-crystalline alumina of less than about 25 mole percent of total aluminum. Alternatively, the content of non-crystalline alumina can be less than about 10 mole percent of total aluminum, less than about 5 mole percent of total aluminum, or less than about 2 mole percent of total aluminum.

It is to be understood that with respect to the particle size, this is the agglomerated particle size as measured in an aqueous dispersion.

The combination of the highly crystalline boehmite having the above described specific particle size and surface area makes it possible to employ smaller quantities of the nano-sized alumina to the cement composition resulting in similar/greater improvements in compressive strength and/or desirable alterations to the rate of chemical shrinkage then what is generally known in the prior art.

Indeed, the prior art does not recognize or teach that the combination of the particular type of alumina, surface area, and crystallinity, as described herein with respect to the present invention, would provide any improvements in either compressive strength and/or control of shrinkage rate.

The above mentioned agglomerate size of the material of this invention is measured by the scattering of light directed at a dilute dispersion of the material in acidic water (Light Scattering Method). Small amounts of acid are added to obtain a dispersion.

Dynamic light scattering methods, sometimes referred to as photon correlation spectroscopy or quasi-elastic light scattering, which are capable of measurements in the range of 1-1000 nm, are most suitable for this measurement. As is well known, these dynamic light scattering methods are commonly used to determine the size distribution profile of small particles in suspension, polymers in solution, etc. While measurement by other methods may be used and may result in agglomerate sizes outside the above ranges, it is to be understood that as long as the agglomerate size falls within the above range when measured by the Light Scattering Method, the material is within the scope of the present invention.

Surface area is determined by the BET method, using nitrogen desorption according to methods well known to those skilled in the art. For reason of comparison the calcined surface area may be consistently obtained by calcination at 550°C for 3h.

Purity is measured by various means well known to those skilled in the art. Inductive coupled plasma or atomic absorption are two commonly used methodologies.

Average crystallite size is measured by x-ray diffraction line broadening as calculated by the Scherrer equation, well known to those skilled in this art. While boehmite alumina exhibits several diffraction peaks, the peak corresponding to the 020 plane is particularly convenient for analysis as it is free of interferences from other diffraction planes.

The content of non-crystalline alumina is measured by ²⁷Al NMR on samples in the dispersed phase. Due to very long relaxation times of the crystalline component, only the soluble and non-crystalline fraction of the material is detected in solution phase analyses. These non-crystalline components consist of either the octahedral [Al(H₂O)₃]³⁺ ion or oligomeric species of the form {[Al(OH)_{2.5}]^{0.5+}}ₙ. Chemical shifts of these substances are well known and the content of such non-crystalline species can be determined by digital integration of signal strength vs. an internal standard.

Crystalline boehmite aluminas obtained from alkoxide precursors can easily be prepared as stable, non-settling dispersions in water through the addition of small amounts of acid, generally a monovalent acid. These crystalline boehmites may optionally be subjected to hydrothermal treatment for the purpose of increasing the average crystallite size of the boehmite, thus rendering the material suitable for dispersion at higher concentrations. While the crystalline boehmite alumina and pseudoboehmite aluminas utilized in this invention may be prepared from the hydrolysis of aluminum alkoxides, it is to be understood that the invention is not so limited. The invention may be used with boehmite aluminas made by other processes such as the hydrothermal transformation of a mixture of boehmite and gibbsite, a mixture of boehmite and bayerite, or combinations thereof provided that the boehmite alumina has the parameters as set forth above regarding crystallinity.

Crystalline boehmite aluminas which have been modified by the addition of up to 10% of other metal oxides may also be utilized in this invention. Boehmites containing calcium oxide, magnesium oxide, or silicon dioxide added in such a manner and quantity so as to not interfere with the ability to form stable dispersions in water are suitable for this invention provided that the boehmite alumina has the parameters as set forth above regarding crystallinity.

In general, the water-to-cement (water: cement) weight ratio in the compositions of the present invention can range from 1 : 0.28 to 0.56, a ratio of from 1 : 0.35 to 0.45 being preferred.

The compositions of the present invention will contain the nano-alumina in an effective amount, i.e., an amount that increases compressive strength, reduces the rate of as well as the final amount of chemical shrinkage, or both. In particular, preferred amounts are from about 0.001% to about 1.5%, preferably from about 0.001% to about 1% by weight, more preferably from about 0.05% to about 0.75% by weight, based on the weight of cement and excluding any additional components, e.g., aggregates.

As it is well known to those skilled in the art, cement is generally made from limestone, calcium, silicon, iron, and aluminum compounds among others while concrete is a masonry material that uses cement to bind together the aggregate such as crushed stone, rock, sand, etc. and can contain other components to impart certain desired properties to the cement.

To demonstrate the invention, the following non-limiting example is presented:

### EXAMPLE

The cement employed was a Type I/II OPC cement - 800 lbs cy. In all cases, the water-to-cement ratio was 0.40 by weight. Two different crystalline boehmite aluminas were employed. Formulations of various amounts of cement and the respective boehmite aluminas were made and tested. The aluminas employed were made by the hydrolysis of aluminum alkoxides. One of the aluminas, identified as Alumina A, has an agglomerated particle size of > 200 nm, a specific calcined surface area (m²/g) of >60, and a purity of >99.80%. The other alumina, identified as Alumina B has an agglomerated particle size of >100 nm, a specific calcined surface area (m²/g) of 250 and purity of >99.80%. Preferably, the aluminas used herein comprise a hydrothermally aged material.

The formulations were subjected to various tests after curing to determine the effect on compressive strength and chemical shrinkage.

Compared to a control containing no alumina, the addition of only small amounts of Alumina A showed a marked increase in compressive strength as compared to the control. In fact, optimum increase in compressive strength is achieved when the alumina is present in an amount of from about 0.75% by weight or less. In this regard, note that maximum increase in compressive strength was achieved when the alumina content ranged from about 0.05% to about 0.75% by weight, a preferred amount. Note for example that when the alumina was increased to 4%, negligible increase in compressive strength was achieved. The remarkable increase in compressive strength using such a small amount of the alumina of the present invention is a totally unexpected result.

Unexpectedly, an amount of alumina of about 0.05% by weight in the cement results in maximum increase in compressive strength. Thus, in the case of Alumina B, the preferred amount present in the alumina would be from about 0.05% to about 0.75% by weight, preferably about 0.05% by weight.

FChemical shrinkage can be depicted as a function of hours of curing for optimum amounts of Alumina A alumina and Alumina B alumina versus a control, i.e., a cement with no alumina. There is a substantial reduction in the rate of chemical shrinkage as well as total shrinkage, as compared to a control sample containing no alumina. The advantages of less chemical shrinkage have been discussed above and are well appreciated by those skilled in the art.

As can be seen from the above data, the claimed nano-sized crystalline boehmite alumina particles increase the compressive strength of cement and decrease chemical shrinkage rates and total shrinkage, making them cost effective additives to enhance the mechanical properties of cement. In particular, because of the unique combination of degree of crystallinity, surface area, and particle size, the alumina of the present invention can be used in small amounts in cement compositions to achieve marked increases in compressive strength and reduction in chemical shrinkage and shrinkage rates.

## Claims

1. A concrete comprising:
cement; aggregate; and
a boehmite alumina, the boehmite alumina having an average crystallite size measured on the [020] plane of from 2 nm to 80 nm, an agglomerated particle size of less than 350 nm as measured in water, and a calcined surface area of from 2 m²/g to 300 m²/g.

2. The concrete of claim 1, wherein the boehmite alumina has a content of non-crystalline alumina of less than 25 mol% based on total aluminum.

3. The concrete of claim 1 or 2, further comprising:
a oxide selected from the group consisting of silicon oxide, calcium oxide, magnesium oxide, or mixtures thereof.

4. The concrete of at least one of the preceding claims, wherein said boehmite alumina has a purity of greater than 99% by weight.

5. The concrete of claim 1, wherein said boehmite alumina has a calcined surface area of from 35 m²/g to 275 m²/g.

6. The concrete of at least one of the preceding claims, wherein said boehmite alumina has an average crystallite size measured on the [020] plane of from 3 nm to 60 nm.

7. The concrete of at least one of the preceding claims, wherein said boehmite alumina is dispersible in water.

8. The concrete of at least one of claim 3 to 7, wherein said oxides comprise up to 10% by weight of the total boehmite alumina including the oxide(s).

9. The concrete of at least one of the preceding claims, wherein the boehmite alumina is present in an amount of from 0.001% to 1% by weight based on the total weight of the cement.

10. The concrete of at least one of the preceding claims, wherein the boehmite alumina is present in an amount of from 0.05% to 0.75% by weight based on the total weight of the cement.

11. The concrete of claim 1, wherein the concrete has a water-to-cement weight ratio of from 1 : 0.28 to 0.56.

## Patentansprüche

1. Beton, umfassend:
Zement; Zuschlagstoff; und
eine böhmitische Tonerde , wobei die böhmitische Tonerde eine an der (020)-Ebene gemessene mittlere Kristallitgröße von 2 nm bis 80 nm, eine Größe der agglomerierten Partikel von weniger als 350 nm, gemessen in Wasser, und eine kalzinierte Oberfläche von 2 m²/g bis 300 m²/g aufweist.

2. Der Beton nach Anspruch 1, wobei die böhmitische Tonerde einen Gehalt an nichtkristallinem Aluminiumoxid von weniger als 25 Mol-%, bezogen auf Gesamtaluminium, aufweist.

3. Der Beton nach Anspruch 1 oder 2, weiterhin umfassend:
ein Oxid, ausgewählt aus der Gruppe bestehend aus Siliciumoxid, Calciumoxid, Magnesiumoxid, oder Gemischen davon.

4. Der Beton nach mindestens einem der vorangehenden Ansprüche, wobei die böhmitische Tonerde eine Reinheit von größer als 99 Gew.-% aufweist.

5. Der Beton nach Anspruch 1, wobei die böhmitische Tonerde eine kalzinierte Oberfläche von 35 m²/g bis 275 m²/g aufweist.

6. Der Beton nach mindestens einem der vorangehenden Ansprüche, wobei die böhmitische Tonerde eine an der (020)-Ebene gemessene mittlere Kristallitgröße von 3 nm bis 60 nm aufweist.

7. Der Beton nach mindestens einem der vorangehenden Ansprüche, wobei die böhmitische Tonerde in Wasser dispergierbar ist.

8. Der Beton nach mindestens einem von Anspruch 3 bis 7, wobei die Oxide bis zu 10 Gew.-% der gesamten böhmitischen Tonerde einschließlich der/des Oxide(s) umfassen.

9. Der Beton nach mindestens einem der vorangehenden Ansprüche, wobei die böhmitische Tonerde in einer Menge von 0,001 Gew.-% bis 1 Gew.-%, bezogen auf das Gesamtgewicht des Zements, vorliegt.

10. Der Beton nach mindestens einem der vorangehenden Ansprüche, wobei die böhmitische Tonerde in einer Menge von 0,05 Gew.-% bis 0,75 Gew.-%, bezogen auf das Gesamtgewicht des Zements, vorliegt.

11. Der Beton nach Anspruch 1, wobei der Beton ein Gewichtsverhältnis von Wasser zu Zement von 1 : 0,28 bis 0,56 aufweist.

## Revendications

1. Béton comprenant :
du ciment ; un agrégat ; et
une alumine de boehmite, l'alumine de boehmite ayant une taille moyenne de cristallite mesurée sur le plan [020] de 2 nm à 80 nm, une taille de particules agglomérées inférieure à 350 nm telle que mesurée dans l'eau, et une surface calcinée de 2 m²/g à 300 m2/g.

2. Béton selon la revendication 1, dans lequel l'alumine de boehmite a une teneur en alumine non cristalline inférieure à 25 % en moles sur la base de l'aluminium total.

3. Béton selon la revendication 1 ou 2, comprenant en outre :
un oxyde choisi dans le groupe consistant en oxyde de silicium, oxyde de calcium, oxyde de magnésium, ou des mélanges de ceux-ci.

4. Béton selon au moins l'une des revendications précédentes, dans lequel ladite alumine de boehmite a une pureté supérieure à 99 % en poids.

5. Béton selon la revendication 1, dans lequel ladite alumine de boehmite a une surface calcinée de 35 m²/g à 275 m²/g.

6. Béton selon au moins l'une des revendications précédentes, dans lequel ladite alumine de boehmite a une taille moyenne de cristallite mesurée sur le plan [020] allant de 3 nm à 60 nm.

7. Béton selon au moins l'une des revendications précédentes, dans lequel ladite alumine de boehmite est dispersible dans l'eau.

8. Béton selon au moins l'une des revendications 3 à 7, dans lequel lesdits oxydes comprennent jusqu'à 10 % en poids de l'alumine de boehmite totale comprenant le ou les oxydes.

9. Béton selon au moins l'une des revendications précédentes, dans lequel l'alumine de boehmite est présente en une quantité allant de 0,001 % à 1 % en poids sur la base du poids total du ciment.

10. Béton selon au moins l'une des revendications précédentes, dans lequel l'alumine de boehmite est présente en une quantité allant de 0,05 % à 0,75 % en poids sur la base du poids total du ciment.

11. Béton selon la revendication 1, le béton ayant un rapport en poids eau sur béton de 1 : 0,28 à 0,56.
